(19) Europäisches Patentamt
European Patent Office
Office européen des brevets

(11) EP 0 640 630 B1

(12) # EUROPÄISCHE PATENTSCHRIFT

(45) Veröffentlichungstag und Bekanntmachung des Hinweises auf die Patenterteilung:
**12.08.1998 Patentblatt 1998/33**

(51) Int Cl.⁶: **C08F 246/00**, C08F 220/12, C09J 133/06

(21) Anmeldenummer: **94109969.9**

(22) Anmeldetag: **28.06.1994**

(54) **Siliciummodifizierte wässrige Kunststoffdispersionen zur Herstellung von Klebemassen**

Aquous dispersion of plastics modified with silicium for the preparation of adhesives

Dispersions aqueuses de matières plastiques modifiées avec du silicium pour la préparation d'adhésifs

(84) Benannte Vertragsstaaten:
**AT BE CH DE ES FR GB IT LI**

(30) Priorität: **30.08.1993 DE 4329090**

(43) Veröffentlichungstag der Anmeldung:
**01.03.1995 Patentblatt 1995/09**

(73) Patentinhaber: **POLYMER LATEX GmbH & Co. KG
45764 Marl (DE)**

(72) Erfinder:
- **Hahn, Karl, Dr.
D-45768 Marl (DE)**
- **Dören, Klaus, Dr.
D-45772 Marl (DE)**

(56) Entgegenhaltungen:
**EP-A- 0 035 332** **EP-A- 0 401 200**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 640 630 B1

Printed by Jouve, 75001 PARIS (FR)

**Beschreibung**

Die Erfindung beschreibt die Verwendung siliciummodifizierter wäßriger Kunststoffdispersionen als Klebemassen mit verbesserter Naßhaftung.

Die Möglichkeit durch geringe Anteile silanolgruppenliefernder Komponenten die anwendungstechnischen Eigenschaften von Klebemassen und Beschichtungen zu verbessern, ist seit längerer Zeit bekannt.

Dies gilt auch für wäßrige Systeme (DE 21 48 456). Insbesondere wird die Haftung auf mineralischen Untergründen - auch nach Wasserlagerung - gegenüber nicht modifiziertem Material deutlich angehoben. Quantitativ kann diese als Naßhaftzugfestigkeit gemessen werden. Sie ist besonders wichtig für zementfreie Klebemassen (z. B. Fliesenkleber). Beim genannten Einsatzgebiet werden in Anlehnung an DIN 18156 i. a. Naßhaftzugfestigkeiten nach Wasserlagerung $\geq 0,5$ N/mm$^2$ gefordert.

Zur Herstellung siliciumfunktionalisierter Bindemittel auf wäßriger Basis sind grundsätzlich mehrere Wege möglich. Einerseits kann das gewünschte Endprodukt direkt aus dem Bindemittel, einem Silan sowie den erforderlichen Füll- und Zusatzstoffen erhalten werden (z. B. EP 0 220 841). Die Verarbeitungszeit und die Einsatzbreite solcher Zubereitungen ist oft begrenzt.

Andererseits kann die Funktionalisierung mit geeigneten Siliciumverbindungen auf der Stufe der Bindemittelherstellung erfolgen.

Das bekannteste Verfahren besteht darin, geeignete ungesättigte Siliciumkomponenten zur Copolymerisation einzusetzen (z. B. DE 23 10 213).

Die EP-A-0 401 200 offenbart Copolymerisate zur Herstellung von Klebemassen, in denen u.a; ungesättigte Silicium-Komponenten (z.B. MEMO) zur Copolymerisation eingesetzt werden können.

Verseifungsbeständigere Styrol/Acrylester-Dispersionen, hergestellt mit ungesättigten Siliciumverbindungen in Gegenwart ungesättigter Säuren, werden in der EP 0 035 332 beschrieben.

Eine bevorzugte Ausführungsform dieser EP 0 035 332 setzt das Silan erst gegen Polymerisationsende ein und erzeugt ein Stufenpolymerisat, aber auch die Silanzufuhr über den gesamten Dosierzeitraum ist in einem Beispiel angewendet.

Beim Einsatz der beschriebenen siliciummodifizierten Styrol/Acrylester-Dispersionen nach EP 0 035 332 in Klebemassen werden nach vorausgegangener Trockenlagerung die eingangs geforderten NaBhaftzugfestigkeiten nach eintägiger Wasserlagerung $\geq 0,5$ N/mm$^2$ z. T. erreicht.

Wird jedoch die Naßhaftzugfestigkeit unter verschärften Bedingungen, z. B. nach 21 Tagen statt 1 Tag Wasserlagerung geprüft, findet man einen Verlust an Naßhaftung.

Eine weitere wesentliche Forderung ist eine weitgehende Viskositätsstabilität dieser Dispersionen bei pH-Anhebung. Dies ist nur teilweise gegeben.

Aus der älteren EP-A-0 612 771 sind silicium modifizierte Dispersionen zur Herstellung von Austrichmitteln, Dispersionsfarben und Verputzen beschrieben.

Die Aufgabe der Erfindung bestand darin, wäßrige Kunststoffdispersionen bereitzustellen, welche die geschilderten Mängel nicht aufweisen.

Die damit hergestellten Klebemassen sollten unabhängig von der Rezeptur sowohl eine gute Naßhaftung liefern, als auch hinsichtlich ihrer Viskosität ohne größere Anteile an Verdickungsmitteln herstellbar sein, da letztere erfahrungsgemäß die Naßhaftzugfestigkeit verschlechtern, und außerdem bei Warmlagerung viskositätsstabil bleiben.

Die gestellte Aufgabe wurde, wie in den Ansprüchen beschrieben, gelöst.

Es wurde überraschenderweise gefunden, daß man unter Anwendung der erfindungsgemäßen siliciummodifizierten wäßrigen Kunststoffdispersionen Klebemassen mit dem geforderten Eigenschaftsbild erhält.

Die erfindungsgemäßen wäßrigen Kunststoffdispersionen bleiben auch bei einer pH-Anhebung viskositätsstabil.

Bei Verwendung der Dispersionen in Fliesenklebern werden Naßhaftzugfestigkeiten (in Anlehnung an DIN 18 156) von größer als 0,5 N/mm$^2$ erreicht, wobei die Kleberviskosität mindestens 60 000 mPa·s, vorteilhaft 70 000 bis 100 000 mPa·s beträgt.

Als hartmachendes Monomer A können beispielsweise Styrol, Methylmethacrylat und Vinylchlorid oder Mischungen eingesetzt werden.

Die weichmachenden Monomeren B können (Meth)acrylsäure-($C_1$ bis $C_{12}$-alkyl)ester, ungesättigte Diene wie Isopren oder 1.3-Butadien, Vinylester Fumarsäure-, Maleinsäuredialkylester und Alkene sein.

Als modifizierende Komponenten kommen als $\alpha,\beta$-olefinisch ungesättigte Monomere C Mono- und Dicarbonsäure wie (Meth)acrylsäure, Maleinsäure oder Fumarsäure und als $\alpha,\beta$-olefinisch ungesättigte Amide E (Meth)acrylamid und/oder 2-Acrylamido-2-methylpentanon-4 bevorzugt zum Einsatz.

Die verwendeten Vinylsilane besitzen die allgemeine Formel:

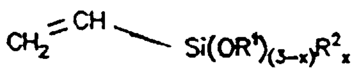

X = 0 - 2   $R^1$ = H, Alkyl, Acyl; $R^2$ = Alkyl

Besonders geeignete Silane sind Vinyltrimethoxysilan, Vinyltriethoxysilan, Vinyltriacetoxysilan, Vinyl-tert.-butoxydiethoxysilan, Methylvinyldiethoxysilan, Vinyltris(i-propoxy)silan, Vinyltris(i-butoxy)silan, Vinyltris(S-butoxy)silan, Vinyltris(2-n-butoxyethoxy)silan.

Neben den erfindungswesentlichen Modifizierungskomponenten können gegebenenfalls weitere Verbindungen eingesetzt werden, z. B. Hydroxyalkyl(meth)acrylat, $\alpha,\beta$-olefinisch ungesättigte Sulfonsäuren und Nitrile, N-Hydroxyalkyl(meth)acrylamid und dessen Alkylether.

Vernetzende Monomere wie Divinylbenzol, Butandiol-1.4-diacrylat, Diallylphthalat, Allylmethacrylat können ebenfalls eingesetzt werden.

Gleichfalls kann es notwendig sein, die Molmasse durch bekannte molekulargewichtsregelnde Substanzen wie Alkylmerkaptane, Halogenkohlenwasserstoffe, aber auch durch Verbindungen vom Typ der Merkaptoalkyltrialkoxysilane einzustellen.

Als Oxidationsinitiatoren werden bevorzugt Natrium-, Kalium- oder Ammoniumperoxidisulfat eingesetzt.

Die Herstellung der siliciummodifizierten Kunststoffdispersionen erfolgt entweder nach einem semikontinuierlichen Verfahren, d. h. die Zugabe des Vinylsilans erfolgt während der gesamten Zulaufzeit der übrigen Monomeren oder in der Anfangsphase der Polymerisation zwischen 0 - 40 % Umsatz der gesamten Monomeren bei einer Temperatur von 70 - 90 °C, bevorzugt 75 - 85 °C, und in einem pH-Bereich von 1,0 - 4,5 in Abwesenheit eines Reduktionsmittels. Soll ein Einfluß auf die Teilchenbildung ausgeschlossen werden, kann die Zufuhr des Silans, z. B. gelöst in einem Teil der Monomeren 10 - 20 Min. nach Polymerisationsbeginn in 60 - 180 Min. erfolgen.

Die Herstellung der Kunststoffdispersionen wird durch die folgenden Beispiele erläutert.

Beispiele

Die Dosierung der ungesättigten Siliciumverbindung während eines Teils des gesamten Zulaufs der Monomeren kann direkt erfolgen, aber auch gelöst in einem Teil der Monomeren oder als Bestandteil eines Teils der Monomeremulsion. Für alle Beispiele gilt Teile gleich Gew.-Teile.

Beispiel 1

In 60 Teilen vollentsalztem Wasser werden 0.3 Teile eines Na-Salzes eines sulfatierten Nonylphenols mit ca. 13 Mol. Ethylenoxid, je 0,01 Teil EDTA und $K_3PO_4$ sowie 0,005 Teile $(NH_4)_2S_2O_8$ gelöst. Diese Lösung wird in einem 150 l $V_2$A-Reaktor mit Doppelmantel und Blattrührer mit 1 °C/Min. auf 77 °C geheizt.

Nach 30 Min. bei 77 °C erfolgt der Zulauf der nachstehend aufgeführten Mischungen.

**Zulauf 1 (Emulsionszulauf)**

| | |
|---|---|
| 23 | Teile Wasser |
| 0,9 | Teile des o. g. Emulgators |
| 0,6 | Teile eines ethoxylierten Laurylalkohols mit ca. 17 Mol Ethylenoxid |
| 0,04 | Teile $K_3PO_4$ |
| 0,3 | Teile $NH_3$, 25 % |
| 0,3 | Teile Ethylendiamintetraessigsäure, Na-Salz |
| 2,0 | Teile Acrylsäure |
| 0,8 | Teile Acrylamid |
| 46,2 | Teile Styrol |
| 50 | Teile n-Butylacrylat |

**Zulauf 2**

| | |
|---|---|
| 15 | Teile $H_2O$ |
| 0,8 | Teile $(NH_4)_2S_2O_8$ |

**Zulauf 3**

| | |
|---|---|
| 1 | Teil Vinyltriethoxysilan |

Dosierbedingungen:

Nach 1 Min. des Zulaufs 2 Beginn des Zulaufs 1.

Zulauf 1 erfolgt in 6 h, Zulauf 2 in 7 h.

15 Min. nach Polymerisationsbeginn beginnt als weiterer getrennter Zulauf die VTEOS-Dosierung in 2 h.

3 h nach Dosierende des Zulaufs 2 werden noch 0,1 Teile $(NH_4)_2S_2O_8$/2 Teile $H_2O$ auf einmal zugesetzt.

Nach weiteren 2 h ist die Polymerisation beendet. Es wird abgekühlt, filtriert und mit NaOH auf pH 7,0 eingestellt.

Nach der pH-Einstellung betrug der Feststoff der Dispersion 49,6 %, die Oberflächenspannung der 1 : 1 mit Wasser verdünnten Dispersion 48,3 mN/m. Der pH-Wert der Dispersion betrug 4,2.

Die Mindestfilmbilde-Temperatur (MFT) lag bei 16 °C (s. Tabelle 1).

Beispiel 2

Nach dem in Beispiel 1 angegebenen Verfahren wurde eine Dispersion mit 0,78 % Vinyltrimethoxysilan hergestellt.

Beispiel 3

In Anlehnung an Beispiel 1 wurde ein Versuchsprodukt mit 1,22 Teilen Vinyltriacetoxysilan erhalten.

Vinyltriacetoxysilan wurde gelöst in 6 Tl. einer 1 : 1 Mischung aus Styrol/n-Butylacrylat dosiert.

Beispiel 4

Es wurde in Anlehnung an Beispiel 1 in einem 12 l $V_2A$-Reaktor polymerisiert.

Der Zulauf 1 setzte sich zusammen aus:

| | |
|---|---|
| 23 | Teile Wasser |
| 0,9 | Teile des in Beispiel 1 genannten anionischen Emulgators |
| 0,6 | Teile des in Beispiel 1 genannten nichtionischen Emulgators |
| 0,04 | Teile $K_3PO_4$ |
| 2,0 | Teile Acrylsäure |
| 0,8 | Teile Acrylamid |
| 46,2 | Teile Styrol |
| 50,0 | Teile n-Butylacrylat |
| 1 | Teil Vinyltriethoxysilan |

Zulauf 2 entsprach Beispiel 1

Zulauf 3 entfällt

Beispiel 5

Es wurde entsprechend Beispiel 4 gearbeitet. Zulauf 1 enthält zusätzlich noch EDTA und $NH_3$ entsprechend Beispiel 1.

Beispiele 6 und 7

Polymerisiert wurde in Anlehnung an Beispiel 4 mit 1,22 Tl. Vinyltris(isopropoxy)silan anstelle Vinyltriethoxysilan bzw. 1,44 Teilen Vinyltris(sec.-butoxy)silan.

Der Styrolanteil wurde entsprechend verringert.

Beispiele 1 - 7: s. Tabelle 1.

Vergleichsbeispiele (s. Tabelle 2)

Vergleichsbeispiel A

1 Teil Methacryloxypropyltrimethoxysilan (MEMO) wurde in Anlehnung an Beispiel 3 anstelle des Vinyltriacetoxysilans eingesetzt. Die Polymerisation erfolgte im 12 l Reaktor.

Vergleichsbeispiel B1

Polymerisiert wurde mit 1 Teil MEMO anstelle des Vinyltriethoxysilans entsprechend Beispiel 4.

Vergleichsbeispiele B2, E1, E2

Die Polymerisation erfolgt mit 1 Tl. MEMO bzw. den in Tabelle 2 genannten Vinylsilanen anstelle Vinyltriethoxysilan analog Beispiel 5.

Vergleichsbeispiel C1

Polymerisiert wurde mit 1 Tl. MEMO, dosiert von 4 - 6 h und ohne Acrylamid im Zulauf 1.

Vergleichsbeispiel D1

Die Polymerisation erfolgt mit Vinyltriethoxysilan, dosiert zwischen 4 - 6 h mit Acrylamid.

Alle bisher durchgeführten Vergleichsversuche demonstrieren die zu geringe Naßhaftzugfestigkeit.

Vergleichsbeispiel F1, F2

Die Polymerisation erfolgt entsprechend Beispiel 1 der EP 0 035 332 aber mit n-Butylacrylat statt Ethylacrylat, d. h. als Stufenpolymerisation in Redoxfahrweise bei 60 °C ohne Acrylamid.

Die Dispersionen sind nicht viskositätsstabil, die Kleberviskosität ist zu gering, zusätzlich erfolgt ein Viskositätsabfall bei Warmlagerung.

Das Beispiel F2 zeigt zusätzlich zu geringe Naßhaftzugfestigkeit.

Vergleichsbeispiele G1, G2

Die Polymerisation erfolgt entsprechend Beispiel 3 der EP 0 035 332 in Redoxfahrweise bei 60 °C mit n-Butylacrylat statt Ethylacrylat und mit 0,8 Tl. Acrylamid.

Die Naßhaftzugfestigkeit ist zu gering, die Kleberviskosität ist zu niedrig und nicht stabil bei Warmlagerung, die Dispersionen sind nicht viskositätsstabil.

Herstellung der zementfreien Klebmassen gemäß Beispiele 1 bis 7 und Vergleichsbeispiele A - G 2

Entsprechend der folgenden Rezeptur wurde eine Klebmasse hergestellt.

Die Naßhaftzugfestigkeit wurde mit keramischen Fliesen auf Betonplatten in Anlehnung an DIN 18 156 nach jeweils 7 Tagen Trocken- bzw. Naßlagerung bestimmt (Tabellen 1 und 2).

| | |
|---|---|
| Kunststoffdispersion Beispiel 1 (pH 8,5; Feststoffgehalt: 50 %) | 250 T. |
| Wasser | 47 T. |
| wäßrige Natronlauge (10 %ig) | 2 T. |
| wäßrige Lösung eines ethoxylierten | 4 T. |

(continued)

| | |
|---|---|
| $C_{12}/C_{14}$-Fettalkohols (17 mol Ethylenoxid/mol Fettalkohol, 25 %ig) | |
| handelsübliches Konservierungsmittel | 2 T. |
| Testbenzin (Flammpunkt: 60 °C) | 10 T. |
| handelsüblicher Entschäumer | 2 T. |
| Kreide (mittlerer Durchmesser: 3 µm) | 130 T. |
| Quarzmehl (Gemisch aus 2 Typen mit den mittleren Durchmessern 27 und 63 µm) | 540 T. |
| Bentonit (Aluminiumschichtsilikat) | 8 T. |
| wäßrige Lösung einer Methylhydroxyethylcellulose (2 %ig, Viskositätstufe 10 000) | 5 T. |
| | 1000 T. |

Tabelle 1: Beispiele

| Beispiel | Vinylsilan $R^1$ | Vinylsilan Menge in % | Dosierbedingungen des Silans [h] | pH-Wert nach der Polym. | Viskosität der Dispersion (mPa · s) pH = 7.0 | pH = 8.5 | pH ≥ 9.5 | Naßhaftzugfestigkeit $N/mm^2$ | Kleberviskosität mPa · s · $10^3$ 1 d | 2 Wo/50 °C |
|---|---|---|---|---|---|---|---|---|---|---|
| 1 | $C_2H_5$- | 1.0 | 0.25 - 2.25 | 4.2 | 248 | 243 | 275 | 0.64 | 82 | 77 |
| 2 | $CH_3$- | 0.78 | 0.25 - 2.25 | 4.4 | 194 | 232 | 219 | 0.52 | 87 | 81 |
| 3 | $CH_3CO$- | 1.22 | 0.25 - 2.25 | 3.9 | 167 | 221 | 189 | 0.50 | 72 | 79 |
| 4 | $C_2H_5$- | 1.0 | 0 - 6 | 1.6 | 90 | 140 | 135 | 0.57 | 80 | 78 |
| 5 | $C_2H_5$- | 1.0 | 0 - 6 | 4.3 | 167 | 184 | 173 | 0.55 | 72 | 72 |
| 6 | i-$C_3H_7$- | 1.22 | 0 - 6 | 1.8 | 119 | 146 | 178 | 0.72 | 76 | 92 |
| 7 | s-$C_4H_9$- | 1.44 | 0 - 6 | 1.5 | 135 | 167 | 208 | 0.74 | 73 | 79 |

Tabelle 2: Vergleichsbeispiele

| Beispiel | Vinylsilan R' | Menge in % | Dosierbedingungen des Silans [h] | pH-Wert nach der Polym. | Viskosität der Dispersion (mPa · s) | | | Naßhaftzugfestigkeit N/mm² | Kleberviskosität mPa · s · $10^3$ | |
|---|---|---|---|---|---|---|---|---|---|---|
| | | | | | pH = 7.0 | pH = 8.5 | pH ≥ 9 | | 1 d | 2 Wo/50 °C |
| A | MEMO [a] | 1.0 | 0.25 - 2.25 | 4.1 | 540 | 551 | 632 | 0.12 | 74 | 80 |
| B1 | MEMO [a] | 1.0 | 0 - 6 | 1.7 | 151 | 167 | 189 | 0.20 | 72 | 86 |
| B2 | MEMO [a] | 1.0 | 0 - 6 | 4.0 | 616 | 599 | 713 | 0.10 | 77 | 90 |
| C1 | MEMO [a] | 1.0 | 4 - 6 | 2.8 | 43 | 38 | 49 | 0.26 | 59 | 67 |
| D1 | $C_2H_5$- | 1.0 | 4 - 6 | 4.4 | 697 | 697 | 761 | 0.20 | 90 | 100 |
| E1 | i-$C_3H_7$- | 1.22 | 0 - 6 | 4.2 | 497 | 491 | 470 | 0.41 | 70 | 70 |
| E2 | s-$C_4H_9$- | 1.44 | 0 - 6 | 4.4 | 319 | 356 | 383 | 0.18 | 73 | 80 |
| F1 | MEMO [a] | 1 | 5 - 6 | 1.9 | 124 | 389 | 702 | 0.57 | 47 | 24 |

[a] MEMO = Methacryloxypropyltrimethoxysilan

Tabelle 2: Vergleichsbeispiele (Fortsetzung)

| Beispiel | Vinylsilan R' | Vinylsilan Menge in % | Dosierbedingungen des Silans [h] | pH-Wert nach der Polym. | Viskosität der Dispersion (mPa · s) pH = 7.0 | pH = 8.5 | pH ≥ 9 | Naßhaftzugfestigkeit N/mm² | Kleberviskosität mPa · s · $10^3$ 1 d | 2 Wo/50 °C |
|---|---|---|---|---|---|---|---|---|---|---|
| F2 | s-$C_4H_9$- | 0.77 | 5 - 6 | 1.8 | 113 | 718 | 1 814 | 0.15 | 48 | 21 |
| G1 | i-$C_3H_7$- | 1.0 | 0 - 6 | 2.7 | 329 | 535 | 880 | 0.39 | 50 | 28 |
| G2 | s-$C_4H_9$- | 1.0 | 0 - 6 | 2.4 | 427 | 497 | 680 | 0.27 | 49 | 25 |

**Patentansprüche**

1. Verwendung von siliciummodifizierten wäßrigen Kunststoffdispersionen, erhalten durch Emulsionspolymerisation von radikalisch polymerisierbaren Monomeren in wäßriger Phase in Gegenwart mindestens eines anionischen Emulgators, mindestens eines freie Radikale bildenden Polymerisationsinitiators und üblicher Hilfsmittel, im wesentlichen enthaltend

   - bezogen auf die gesamten Monomeren A - E -,

   A) 24,1 bis 75 Massen-% eines hartmachenden Monomers,
   B) 24,1 bis 75 Massen-% eines weichmachenden Monomers,
   C) 0,5 bis 5 Massen-% einer α,β-ethylenisch ungesättigten Carbonsäure,
   D) 0,2 bis 3 Massen-% eines Vinylsilans der allgemeinen Formel

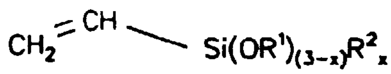

$X = 0 - 2 \quad R^1 = H, Alkyl, Acyl; R^2 = Alkyl$

   E) 0,2 bis 4 Massen-% des Amids einer α,β-ethylenisch ungesättigten Carbonsäure,

   wobei das hartmachende und das weichmachende Monomer dadurch charakterisiert sind, daß die damit jeweils herstellbaren Homopolymerisate eine Glastemperatur von ≥50 (A) bzw. ≤ 20 °C (B) aufweisen und die Polymerisation hinsichtlich der Monomer- und der Initiatorzugabe semikontinuierlich durchgeführt und dabei das Vinylsilan während der gesamten Zulaufzeit der übrigen Monomeren oder in der Anfangsphase der Polymerisation zwischen 0 bis 40 % Umsatz der gesamten Monomeren zudosiert wird, der Initiator in Abwesenheit eines Reduktionsmittels eingesetzt wird und die Polymerisation im pH-Bereich von 1,0 - 4,5 und bei einer Temperatur von 70 - 90 °C durchgeführt wird, zur Herstellung von Klebemassen.

2. Verwendung nach Anspruch 1,
   dadurch gekennzeichnet,
   daß als hartmachendes Monomer A Styrol, Methylmethacrylat oder Vinylchlorid oder Mischungen eingesetzt werden.

3. Verwendung den Ansprüchen 1 bis 2,
   dadurch gekennzeichnet,
   daß als weichmachendes Monomer B 1,3-Butadien, Isopren, (Meth)acrylsäurealkylester, Maleinsäuredialkylester, Fumarsäuredialkylester, Vinylester oder Olefine eingesetzt werden.

4. Verwendung nach den Ansprüchen 1 bis 3,
   dadurch gekennzeichnet,
   daß als α,β-ethylenisch ungesättigte Carbonsäure C (Meth)acrylsäure, Maleinsäure oder Fumarsäure eingesetzt werden.

5. Verwendung nach den Ansprüchen 1 bis 4,
   dadurch gekennzeichnet,
   daß als Amide einer α,β-ethylenisch ungesättigten Carbonsäure E (Meth)acrylamid und/oder 2-Acrylamido-2-methylpentanon-4 eingesetzt werden.

6. Verwendung nach den Ansprüchen 1 bis 5,
   dadurch gekennzeichnet,
   daß als Vinylsilane Vinyltrimethoxysilan, Vinyltriethoxysilan, Vinyltriacetoxysilan, Vinyl-tert.-butoxydiethoxysilan, Methylvinyldiethoxysilan, Vinyltris(i-propoxy)silan, Vinyltris(i-butoxy)silan, Vinyltris(s-butoxy)silan, Vinyltris(2-n-butoxyethoxy)silan eingesetzt werden.

7. Verwendung nach einem der Ansprüche 1 bis 6 als Fliesenkleber.

## Claims

1. Use of a silicon-modified aqueous polymer dispersion obtained by emulsion polymerization of free-radically polymerizable monomers in aqueous phase in the presence of at least one anionic emulsifier, at least one polymerization initiator which forms free radicals, and customary auxiliaries, essentially comprising

   - based on the total monomers A - E -

     A) from 24.1 to 75% by mass of a hardening monomer,
     B) from 24.1 to 75% by mass of a softening monomer,
     C) from 0.5 to 5% by mass of an α,β-ethylenically unsaturated carboxylic acid,
     D) from 0.2 to 3% by mass of a vinylsilane of the general formula

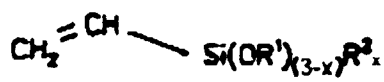

$x = 0 - 2$; $R^1$ = H, alkyl, acyl; $R^2$ = alkyl

     E) from 0.2 to 4% by mass of the amide of an α,β-ethylenically unsaturated carboxylic acid,

   the hardening and the softening monomer being characterized in that the homopolymers preparable in each case therewith have a glass transition temperature of ≥ 50 (A) or ≤ 20°C (B) and the polymerization is carried out semi-continuously in terms of the addition of monomer and the addition of initiator, with the vinylsilane being metered in throughout the feed time of the other monomers or in the initial phase of polymerization at from 0 to 40% conversion of the total monomers, the initiator being employed in the absence of a reducing agent and the polymerization being conducted within the pH range of 1.0 - 4.5 and at a temperature of 70 - 90°C, for producing adhesive compositions.

2. Use according to claim 1, characterized in that styrene, methyl methacrylate or vinyl chloride or mixtures are employed as hardening monomer A.

3. Use according to either of claims 1 and 2, characterized in that 1,3-butadiene, isoprene, alkyl (meth)acrylates, dialkyl maleates, dialkyl fumarates, vinyl esters or olefins are employed as softening monomer B.

4. Use according to any of claims 1 to 3, characterized in that (meth)acrylic acid, maleic acid or fumaric acid is employed as α,β-ethylenically unsaturated carboxylic acid C.

5. Use according to any of claims 1 to 4, characterized in that (meth)acrylamide and/or 2-acrylamido-2-methyl-4-pentanone are/is employed as amide(s) of an α,β-ethylenically unsaturated carboxylic acid E.

6. Use according to any of claims 1 to 5, characterized in that vinyltrimethoxysilane, vinyltriethoxysilane, vinyltriacetoxysilane, vinyl-tert-butoxydiethoxysilane, methylvinyldiethoxysilane, vinyltris(i-propoxy)silane, vinyltris(i-butoxy) silane, vinyltris(s-butoxy)silane, vinyltris(2-n-butoxyethoxy)silane are employed as vinylsilanes.

7. Use according to any one of claims 1 to 6 as tile adhesive.

## Revendications

1. Utilisation de dispersions aqueuses de matières plastiques modifiées par du silicium, obtenues par polymérisation

en émulsion de monomères polymérisables par voie radicalaire en phase aqueuse en présence d'au moins un agent émulsionnant anionique, d'au-moins un initiateur de polymérisation qui forme des radicaux libres et d'adjuvants usuels contenant pour l'essentiel rapporté à la totalité des monomères A-E

A) de 24,1 à 75 % en masse d'un monomère qui durcit,
B) de 24,1 à 75 % en masse d'un monomère plastifiant,
C) de 0,5 à 5 % en masse d'un acide carboxylique non saturé $\alpha,\beta$-éthyléniquement,
D) de 0,2 à 3 % en masse d'un vinylsilane de formule générale,

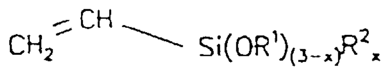

$$X = 0 - 2 \quad R^1 = H, alkyl, acyl ; \quad R^2 = alkyl$$

E) de 0,2 à 4 % en masse d'amide d'un acide carboxylique non saturé $\alpha,\beta$-éthyléniquement,
dans laquelle le monomère qui durcit et le monomère plastifiant sont caractérisés en ce que

- les homopolymérisats que l'on peut produire à chaque fois de cette façon possèdent une température vitreuse à partir de ≥ 50°C (A) ou ≤ 20°C (B), et
- la polymérisation en ce que concerne l'addition des monomères et de l'initiateur est effectuée d'une manière semi-continue et de cette façon le vinylsilane pendant la totalité du temps d'amenée des monomères usuels ou dans la phase initiale de la polymérisation est ajouté par doses comprises entre 0 et 40 % de conversion des monomères totaux,
- on met en oeuvre l'initiateur en l'absence d'un agent de réduction et
- on effectue la polymérisation dans une plage de pH allant de 1,0 à 4,5 et à une température de 70 à 90°C, pour la fabrication de masses adhésives.

**2.** Utilisation selon la revendication 1,
caractérisée en ce qu'
on met en oeuvre comme monomère qui durcit A, du styrène, du méthacrylate de méthyle, du chlorure de vinyle ou des mélanges de ceux-ci.

**3.** Utilisation selon les revendications 1 à 2,
caractérisée en ce qu'
on met en oeuvre comme monomère plastifiant B, le 1,3-butadiène l'isoprène, un ester d'alkyle d'acide(méth)-acrylique, un diester d'alkyle d'acide maléique, un diester d'alkyle d'acide fumarique, un ester de vinyle ou des oléfines.

**4.** Utilisation selon les revendications 1 à 3,
caractérisée en ce qu'
on met en oeuvre comme acide carboxylique non saturé $\alpha,\beta$-éthyléniquement, C, l'acide (méth) acrylique, l'acide maléique ou l'acide fumarique.

**5.** Utilisation selon les revendications 1 à 4,
caractérisée en ce qu'
on met en oeuvre comme amide d'un acide carboxylique non saturé $\alpha,\beta$-éthyléniquement E, le (méth)acrylamide et/ou la 2-acrylamido-2-méthyl pentanone-4.

**6.** Utilisation selon les revendications 1 à 5,
caractérisé en ce qu'
on met en oeuvre comme vinylsilanes le vinyltriméthoxysilane, le vinyltriéthoxysilane, le vinyltriacétoxysilane, le vinyl-ter-butoxydiéthoxysilane, le méthylvinyl-diéthoxysilane, le vinyltris-(i-propoxy)silane, le vinyltris-(i-butoxy)silane, le vinyltris(s-butoxy)silane, le vinyltris (2-n-butoxyéthoxy)silane.

**7.** Utilisation selon l'une des revendications 1 à 6 comme colle pour les carreaux de céramique.